# EUROPEAN PATENT APPLICATION

(11) **EP 3 623 679 A1**
(43) Date of publication of application: **18.03.2020**
(21) Application number: 19192291.3
(22) Date of filing: 19.08.2019
(51) Int. Cl.: F16L 27/08, F16L 27/111, F16L 27/12, F16L 51/02, B64D 13/02

(54) **JOINT**

(30) Priority: 17.09.2018 GB 201815083
(71) Applicant: Rolls-Royce plc, London N1 9FX (GB)
(72) Inventor: Innis, Daniel, Derby, Derbyshire DE24 8BJ (GB)
(74) Representative: Rolls-Royce plc

(57) **Abstract**

A joint (110) for coupling ducts (104), the joint (110) including: a flexible conduit section (146) extending along an axial direction (116) from a first end (112) to a second end (114); a first connector (118) at a first end (112) of the flexible conduit (146), arranged to releasably couple the flexible conduit section (146) to a first duct (104); a first bearing member (122) extending from the first connector (118), and forming a first bearing surface (158) defining a first plane, wherein the axial direction (116) passes through the first plane; a second connector (132) at the second end (114) of the flexible conduit (146), arranged to releasably couple the flexible conduit section (146) to a second duct (104); a second bearing member (136) extending from the second connector (132), the second bearing member (136) forming a second bearing surface (160) facing the first bearing surface (158) and defining a second plane, wherein the axial direction (116) passes through the second plane; a rod (156, 228) extending between the bearing surfaces (158, 160), wherein the rod (156, 228) pivotally engages the first bearing surface (158) at a first pivot joint (166), and the second bearing surface (160) at a second pivot joint (168), and wherein the rod (156, 228) is arranged to releasably couple the first bearing member (122) to the second bearing member (136).

## Description

The present disclosure relates to a joint for ducts, an air ducting system and a gas turbine aircraft engine. In particular, but not exclusively, the present disclosure relates to a flexible disconnect point for air ducting systems.

Ducting systems can be used in a wide variety of different applications, to convey fluids, gasses or liquids between different locations. In gas turbine aircraft engines, ducting systems have a wide range of uses. For example, they may be used to deliver compressed air from the engine to the passenger cabin of the aircraft, to deliver air to other engines mounted to the aircraft, to deliver heated air to anti-icing systems, or to deliver air for engine starter systems.

Ducting systems are often not mounted in a static arrangement, and may experience distortion forces. For example, a ducting system mounted on a gas turbine aircraft engine may experience distortion forces due to acceleration loads, or thermal expansion of the engine. Distortion may also be experienced when different parts of the engine expand at different rates. To accommodate such distortion forces, the ducting system may include a number of flexible joints to allow for relative displacement of different parts of the ducting, and to prevent torsional forces twisting the ducting.

In some ducting systems, it may be necessary to disconnect parts of the system. This can be either to allow access for maintenance, or to allow for sections of ducting to be replaced. Typically, the disconnect points are formed from connectors such as vee-band clamps.

According to a first aspect, there is provided a joint for coupling ducts, the joint including: a flexible conduit section extending along an axial direction from a first end to a second end; a first connector at a first end of the flexible conduit, arranged to releasably couple the flexible conduit section to a first duct; a first bearing member extending from the first connector, and forming a first bearing surface defining a first plane, wherein the axial direction passes through the first plane; a second connector at the second end of the flexible conduit, arranged to releasably couple the flexible conduit section to a second duct; a second bearing member extending from the second connector, the second bearing member forming a second bearing surface facing the first bearing surface and defining a second plane, wherein the axial direction passes through the second plane; a rod extending between the bearing surfaces, wherein the rod pivotally engages the first bearing surface at a first pivot joint, and the second bearing surface at a second pivot joint, and wherein the rod is arranged to releasably couple the first bearing member to the second bearing member.

The joint provides a disconnect point and accommodates duct displacements, in a single component. Therefore, separate flexible joints and disconnect points are not required, reducing the weight in the ducting system. The rod restricts the range of movements of the flexible joint, to prevent damaging the flexible conduit section, whilst the flexible conduit section prevents damage to the ducting system by allowing displacement. The rod also allows easy access to the connectors, to allow the joint to be disconnected when needed.

The first connector and second connector may be releasably coupled to the flexible conduit. The first connector may be fixedly coupled to the first duct, and the second connector may be releasably coupled to the second duct.

The first pivot joint may be configured to enable the rod to pivot relative to the first bearing surface along a first pivot direction in the first plane; and the second pivot joint may be configured to enable the rod to pivot relative to the second bearing surface along a second pivot direction in the second plane. Any movement not along the pivot directions may be restricted. By using pivot joints which restrict the movement of the rod, the joint is able to resist torsional forces which may damage the flexible conduit. The first pivot direction may be perpendicular to the second pivot direction. This ensures that both ends of the joint is able to accommodate relative displacement around a 360 degrees.

Each pivot joint may include: an end portion of the rod. The end portion of the rod may comprise a face forming an end of the rod. The face may be curved in cross section taken parallel to the pivot direction and axial direction. The face may have a width extending along the pivot direction. The pivot joint may also include a depression into the bearing surface arranged to receive at least part of the end portion of the rod. The depression may have a base. The base may be curved in cross-section taken parallel to the pivot direction and axial direction, and may extend over a width along the pivot direction. The width of the depression may be greater than the width of the end portion of the rod. A radius of curvature of the base of the depression may match a radius of curvature of the face of the end of the rod.

The end portions of the rod may comprise a pair of opposing planar sides extending parallel to the axial direction and pivot direction and separated by a thickness perpendicular to the pivot direction and axial direction. The face may extend between the planar sides. The depression may have a pair of sidewalls extending parallel to the planar sides of the end portion and separated by a spacing perpendicular to the pivot direction and axial direction. The spacing of the sidewalls may correspond to the thickness of the end portion of the rod, such that the end portion is restricted from pivoting perpendicular to the pivot direction.

The rod may include a first retaining portion at the first bearing surface, and a second retaining portion at the second bearing surface. The joint may further include a first clamping member arranged to engage the first bearing surface and first retaining portion to secure the rod to the first bearing surface, and a second clamping member arranged to engage the second bearing surface and second retaining portion to secure the rod to the second bearing surface.

Each clamping member may be arranged around the rod, and may include an opening through which the rod passes. The opening may be larger than the rod, such that the clamping member allows the rod to pivot relative to the bearing surface. The clamping members may be releasably secured to the bearing surfaces.

Alternatively, the clamping members may be fixedly secured to the bearing surfaces, and the rod may include a first rod portion, a second rod portion, and a releasable connection between the first rod portion and the second rod portion. The releasable connection may comprise a socket member formed in the end of the first rod portion, and plug member, arranged to engage in the socket, formed in the end of the second rod portion. The socket member may define an enclosure to receive the plug member, the enclosure extending along a portion of the length of the rod. The plug member may have a length extending shorter than the enclosure. The releasable connection may comprise a slip joint arranged to accommodate extension or compression of the rod in the axial direction. Therefore, the joint between ducting sections can accommodate axial distortions.

At least one of the first plane and the second plane may extend perpendicular to the axial direction. The first plane may be parallel to the second plane. The rod may extend parallel to the axial direction. The first and second bearing members may extend radially out from the flexible conduit. The flexible conduit may comprise a bellows section.

According to a second aspect, there is provided an air ducting system comprising: a first duct; a second duct; and a joint according to the first aspect, coupling the first duct to the second duct.

By using the joint, a disconnect point and region to accommodate duct displacements can be provided in a single component. Therefore, separate flexible joints and disconnect points are not required, reducing the weight in the ducting system.

According to a third aspect, there is provided a gas turbine aircraft engine comprising an air ducting system according to the second aspect, to provide one or more of the following: cabin bleed air; air transfer to or from a further gas turbine aircraft engine; air for anti-icing systems; and starter air.

By using the system of the first aspect, a disconnect point and region to accommodate duct displacements can be provided in a single component. Therefore, separate flexible joints and disconnect points are not required, reducing the weight in the ducting system.

As noted elsewhere herein, the present disclosure may relate to a gas turbine engine. Such a gas turbine engine may comprise an engine core comprising a turbine, a combustor, a compressor, and a core shaft connecting the turbine to the compressor. Such a gas turbine engine may comprise a fan (having fan blades) located upstream of the engine core.

Arrangements of the present disclosure may be particularly, although not exclusively, beneficial for fans that are driven via a gearbox. Accordingly, the gas turbine engine may comprise a gearbox that receives an input from the core shaft and outputs drive to the fan so as to drive the fan at a lower rotational speed than the core shaft. The input to the gearbox may be directly from the core shaft, or indirectly from the core shaft, for example via a spur shaft and/or gear. The core shaft may rigidly connect the turbine and the compressor, such that the turbine and compressor rotate at the same speed (with the fan rotating at a lower speed).

The gas turbine engine as described and/or claimed herein may have any suitable general architecture. For example, the gas turbine engine may have any desired number of shafts that connect turbines and compressors, for example one, two or three shafts. Purely by way of example, the turbine connected to the core shaft may be a first turbine, the compressor connected to the core shaft may be a first compressor, and the core shaft may be a first core shaft. The engine core may further comprise a second turbine, a second compressor, and a second core shaft connecting the second turbine to the second compressor. The second turbine, second compressor, and second core shaft may be arranged to rotate at a higher rotational speed than the first core shaft.

In such an arrangement, the second compressor may be positioned axially downstream of the first compressor. The second compressor may be arranged to receive (for example directly receive, for example via a generally annular duct) flow from the first compressor.

The gearbox may be arranged to be driven by the core shaft that is configured to rotate (for example in use) at the lowest rotational speed (for example the first core shaft in the example above). For example, the gearbox may be arranged to be driven only by the core shaft that is configured to rotate (for example in use) at the lowest rotational speed (for example only be the first core shaft, and not the second core shaft, in the example above). Alternatively, the gearbox may be arranged to be driven by any one or more shafts, for example the first and/or second shafts in the example above.

In any gas turbine engine as described and/or claimed herein, a combustor may be provided axially downstream of the fan and compressor(s). For example, the combustor may be directly downstream of (for example at the exit of) the second compressor, where a second compressor is provided. By way of further example, the flow at the exit to the combustor may be provided to the inlet of the second turbine, where a second turbine is provided. The combustor may be provided upstream of the turbine(s).

The or each compressor (for example the first compressor and second compressor as described above) may comprise any number of stages, for example multiple stages. Each stage may comprise a row of rotor blades and a row of stator vanes, which may be variable stator vanes (in that their angle of incidence may be variable). The row of rotor blades and the row of stator vanes may be axially offset from each other.

The or each turbine (for example the first turbine and second turbine as described above) may comprise any number of stages, for example multiple stages. Each stage may comprise a row of rotor blades and a row of stator vanes. The row of rotor blades and the row of stator vanes may be axially offset from each other.

Each fan blade may be defined as having a radial span extending from a root (or hub) at a radially inner gas-washed location, or 0% span position, to a tip at a 100% span position. The ratio of the radius of the fan blade at the hub to the radius of the fan blade at the tip may be less than (or on the order of) any of: 0.4, 0.39, 0.38 0.37, 0.36, 0.35, 0.34, 0.33, 0.32, 0.31, 0.3, 0.29, 0.28, 0.27, 0.26, or 0.25. The ratio of the radius of the fan blade at the hub to the radius of the fan blade at the tip may be in an inclusive range bounded by any two of the values in the previous sentence (i.e. the values may form upper or lower bounds). These ratios may commonly be referred to as the hub-to-tip ratio. The radius at the hub and the radius at the tip may both be measured at the leading edge (or axially forwardmost) part of the blade. The hub-to-tip ratio refers, of course, to the gas-washed portion of the fan blade, i.e. the portion radially outside any platform.

The radius of the fan may be measured between the engine centreline and the tip of a fan blade at its leading edge. The fan diameter (which may simply be twice the radius of the fan) may be greater than (or on the order of) any of: 250 cm (around 100 inches), 260 cm, 270 cm (around 105 inches), 280 cm (around 110 inches), 290 cm (around 115 inches), 300 cm (around 120 inches), 310 cm, 320 cm (around 125 inches), 330 cm (around 130 inches), 340 cm (around 135 inches), 350cm, 360cm (around 140 inches), 370 cm (around 145 inches), 380 (around 150 inches) cm or 390 cm (around 155 inches). The fan diameter may be in an inclusive range bounded by any two of the values in the previous sentence (i.e. the values may form upper or lower bounds).

The rotational speed of the fan may vary in use. Generally, the rotational speed is lower for fans with a higher diameter. Purely by way of non-limitative example, the rotational speed of the fan at cruise conditions may be less than 2500 rpm, for example less than 2300 rpm. Purely by way of further non-limitative example, the rotational speed of the fan at cruise conditions for an engine having a fan diameter in the range of from 250 cm to 300 cm (for example 250 cm to 280 cm) may be in the range of from 1700 rpm to 2500 rpm, for example in the range of from 1800 rpm to 2300 rpm, for example in the range of from 1900 rpm to 2100 rpm. Purely by way of further non-limitative example, the rotational speed of the fan at cruise conditions for an engine having a fan diameter in the range of from 320 cm to 380 cm may be in the range of from 1200 rpm to 2000 rpm, for example in the range of from 1300 rpm to 1800 rpm, for example in the range of from 1400 rpm to 1600 rpm.

In use of the gas turbine engine, the fan (with associated fan blades) rotates about a rotational axis. This rotation results in the tip of the fan blade moving with a velocity Uₜᵢₚ. The work done by the fan blades 13 on the flow results in an enthalpy rise dH of the flow. A fan tip loading may be defined as dH/Uₜᵢₚ², where dH is the enthalpy rise (for example the 1-D average enthalpy rise) across the fan and Uₜᵢₚ is the (translational) velocity of the fan tip, for example at the leading edge of the tip (which may be defined as fan tip radius at leading edge multiplied by angular speed). The fan tip loading at cruise conditions may be greater than (or on the order of) any of: 0.3, 0.31, 0.32, 0.33, 0.34, 0.35, 0.36, 0.37, 0.38, 0.39 or 0.4 (all units in this paragraph being Jkg⁻¹K⁻¹/(ms⁻¹)²). The fan tip loading may be in an inclusive range bounded by any two of the values in the previous sentence (i.e. the values may form upper or lower bounds).

Gas turbine engines in accordance with the present disclosure may have any desired bypass ratio, where the bypass ratio is defined as the ratio of the mass flow rate of the flow through the bypass duct to the mass flow rate of the flow through the core at cruise conditions. In some arrangements the bypass ratio may be greater than (or on the order of) any of the following: 10, 10.5, 11, 11.5, 12, 12.5, 13, 13.5, 14, 14.5, 15, 15.5, 16, 16.5, or 17. The bypass ratio may be in an inclusive range bounded by any two of the values in the previous sentence (i.e. the values may form upper or lower bounds). The bypass duct may be substantially annular. The bypass duct may be radially outside the core engine. The radially outer surface of the bypass duct may be defined by a nacelle and/or a fan case.

The overall pressure ratio of a gas turbine engine as described and/or claimed herein may be defined as the ratio of the stagnation pressure upstream of the fan to the stagnation pressure at the exit of the highest pressure compressor (before entry into the combustor). By way of non-limitative example, the overall pressure ratio of a gas turbine engine as described and/or claimed herein at cruise may be greater than (or on the order of) any of the following: 35, 40, 45, 50, 55, 60, 65, 70, 75. The overall pressure ratio may be in an inclusive range bounded by any two of the values in the previous sentence (i.e. the values may form upper or lower bounds).

Specific thrust of an engine may be defined as the net thrust of the engine divided by the total mass flow through the engine. At cruise conditions, the specific thrust of an engine described and/or claimed herein may be less than (or on the order of) any of the following: 110 Nkg⁻¹s, 105 Nkg⁻¹s, 100 Nkg⁻¹s, 95 Nkg⁻¹s, 90 Nkg⁻¹s, 85 Nkg⁻¹s or 80 Nkg⁻¹s. The specific thrust may be in an inclusive range bounded by any two of the values in the previous sentence (i.e. the values may form upper or lower bounds). Such engines may be particularly efficient in comparison with conventional gas turbine engines.

A gas turbine engine as described and/or claimed herein may have any desired maximum thrust. Purely by way of non-limitative example, a gas turbine as described and/or claimed herein may be capable of producing a maximum thrust of at least (or on the order of) any of the following: 160kN, 170kN, 180kN, 190kN, 200kN, 250kN, 300kN, 350kN, 400kN, 450kN, 500kN, or 550kN. The maximum thrust may be in an inclusive range bounded by any two of the values in the previous sentence (i.e. the values may form upper or lower bounds). The thrust referred to above may be the maximum net thrust at standard atmospheric conditions at sea level plus 15 deg C (ambient pressure 101.3kPa, temperature 30 deg C), with the engine static.

In use, the temperature of the flow at the entry to the high pressure turbine may be particularly high. This temperature, which may be referred to as TET, may be measured at the exit to the combustor, for example immediately upstream of the first turbine vane, which itself may be referred to as a nozzle guide vane. At cruise, the TET may be at least (or on the order of) any of the following: 1400K, 1450K, 1500K, 1550K, 1600K or 1650K. The TET at cruise may be in an inclusive range bounded by any two of the values in the previous sentence (i.e. the values may form upper or lower bounds). The maximum TET in use of the engine may be, for example, at least (or on the order of) any of the following: 1700K, 1750K, 1800K, 1850K, 1900K, 1950K or 2000K. The maximum TET may be in an inclusive range bounded by any two of the values in the previous sentence (i.e. the values may form upper or lower bounds). The maximum TET may occur, for example, at a high thrust condition, for example at a maximum take-off (MTO) condition.

A fan blade and/or aerofoil portion of a fan blade described and/or claimed herein may be manufactured from any suitable material or combination of materials. For example at least a part of the fan blade and/or aerofoil may be manufactured at least in part from a composite, for example a metal matrix composite and/or an organic matrix composite, such as carbon fibre. By way of further example at least a part of the fan blade and/or aerofoil may be manufactured at least in part from a metal, such as a titanium based metal or an aluminium based material (such as an aluminium-lithium alloy) or a steel based material. The fan blade may comprise at least two regions manufactured using different materials. For example, the fan blade may have a protective leading edge, which may be manufactured using a material that is better able to resist impact (for example from birds, ice or other material) than the rest of the blade. Such a leading edge may, for example, be manufactured using titanium or a titanium-based alloy. Thus, purely by way of example, the fan blade may have a carbon-fibre or aluminium based body (such as an aluminium lithium alloy) with a titanium leading edge.

A fan as described and/or claimed herein may comprise a central portion, from which the fan blades may extend, for example in a radial direction. The fan blades may be attached to the central portion in any desired manner. For example, each fan blade may comprise a fixture which may engage a corresponding slot in the hub (or disc). Purely by way of example, such a fixture may be in the form of a dovetail that may slot into and/or engage a corresponding slot in the hub/disc in order to fix the fan blade to the hub/disc. By way of further example, the fan blades maybe formed integrally with a central portion. Such an arrangement may be referred to as a blisk or a bling. Any suitable method may be used to manufacture such a blisk or bling. For example, at least a part of the fan blades may be machined from a block and/or at least part of the fan blades may be attached to the hub/disc by welding, such as linear friction welding.

The gas turbine engines described and/or claimed herein may or may not be provided with a variable area nozzle (VAN). Such a variable area nozzle may allow the exit area of the bypass duct to be varied in use. The general principles of the present disclosure may apply to engines with or without a VAN.

The fan of a gas turbine as described and/or claimed herein may have any desired number of fan blades, for example 16, 18, 20, or 22 fan blades.

As used herein, cruise conditions may mean cruise conditions of an aircraft to which the gas turbine engine is attached. Such cruise conditions may be conventionally defined as the conditions at mid-cruise, for example the conditions experienced by the aircraft and/or engine at the midpoint (in terms of time and/or distance) between top of climb and start of decent.

Purely by way of example, the forward speed at the cruise condition may be any point in the range of from Mach 0.7 to 0.9, for example 0.75 to 0.85, for example 0.76 to 0.84, for example 0.77 to 0.83, for example 0.78 to 0.82, for example 0.79 to 0.81, for example on the order of Mach 0.8, on the order of Mach 0.85 or in the range of from 0.8 to 0.85. Any single speed within these ranges may be the cruise condition. For some aircraft, the cruise conditions may be outside these ranges, for example below Mach 0.7 or above Mach 0.9.

Purely by way of example, the cruise conditions may correspond to standard atmospheric conditions at an altitude that is in the range of from 10000m to 15000m, for example in the range of from 10000m to 12000m, for example in the range of from 10400m to 11600m (around 38000 ft), for example in the range of from 10500m to 11500m, for example in the range of from 10600m to 11400m, for example in the range of from 10700m (around 35000 ft) to 11300m, for example in the range of from 10800m to 11200m, for example in the range of from 10900m to 11100m, for example on the order of 11000m. The cruise conditions may correspond to standard atmospheric conditions at any given altitude in these ranges.

Purely by way of example, the cruise conditions may correspond to: a forward Mach number of 0.8; a pressure of 23000 Pa; and a temperature of -55 deg C.

As used anywhere herein, "cruise" or "cruise conditions" may mean the aerodynamic design point. Such an aerodynamic design point (or ADP) may correspond to the conditions (comprising, for example, one or more of the Mach Number, environmental conditions and thrust requirement) for which the fan is designed to operate. This may mean, for example, the conditions at which the fan (or gas turbine engine) is designed to have optimum efficiency.

In use, a gas turbine engine described and/or claimed herein may operate at the cruise conditions defined elsewhere herein. Such cruise conditions may be determined by the cruise conditions (for example the mid-cruise conditions) of an aircraft to which at least one (for example 2 or 4) gas turbine engine may be mounted in order to provide propulsive thrust.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

Embodiments will now be described by way of example only, with reference to the Figures, in which:
**Figure 1** is a sectional side view of a gas turbine engine;
**Figure 2** is a close up sectional side view of an upstream portion of a gas turbine engine;
**Figure 3** is a partially cut-away view of a gearbox for a gas turbine engine;
**Figure 4** schematically illustrates an air duct system for delivering air to a passenger cabin of an air craft;
**Figure 5A** illustrates a side view of a flexible disconnect joint for use in the system of Figure 4;
**Figure 5B** illustrates a perspective view of the flexible disconnect joint of Figure 5A;
**Figure 6** illustrates a sectional side view of the joint of Figure 5A;
**Figure 7A** shows a schematic sectional view of a pivot joint on a bearing surface of the flexible disconnect joint of Figure 5A, taken parallel to a pivot direction;
**Figure 7B** shows a schematic sectional view of a pivot joint on a bearing surface of the flexible disconnect joint of Figure 5A, taken perpendicular to a pivot direction;
**Figure 8** shows the connecting rod of the joint of Figure 5A; and
**Figure 9** shows a connecting rod for an alternative embodiment of the flexible disconnect joint.

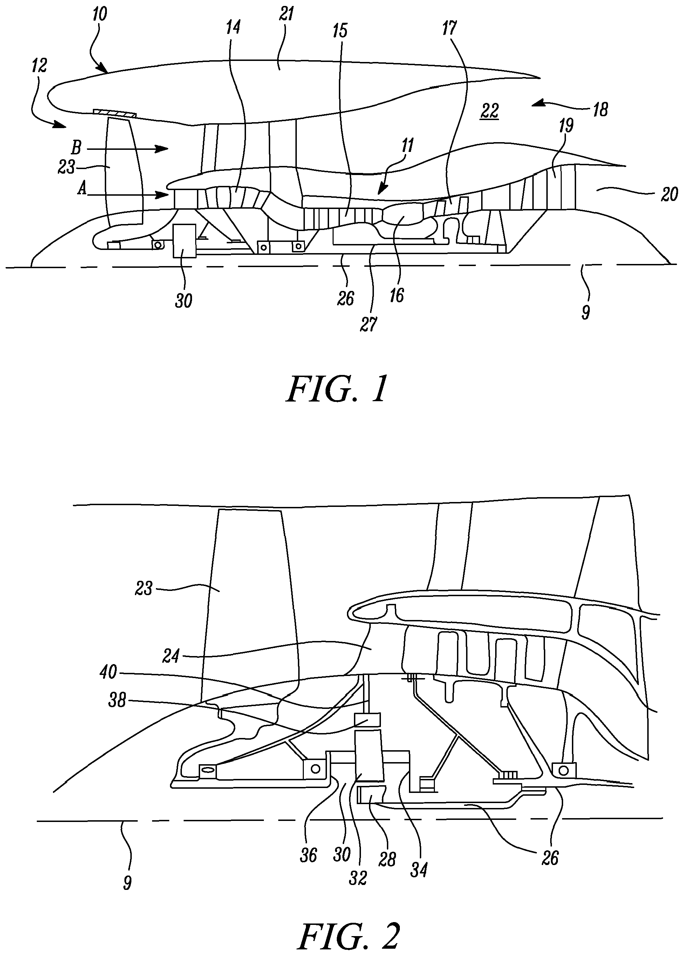

Figure 1 illustrates a gas turbine engine 10 having a principal rotational axis 9. The engine 10 comprises an air intake 12 and a propulsive fan 23 that generates two airflows: a core airflow A and a bypass airflow B. The gas turbine engine 10 comprises a core 11 that receives the core airflow A. The engine core 11 comprises, in axial flow series, a low pressure compressor 14, a high-pressure compressor 15, combustion equipment 16, a high-pressure turbine 17, a low pressure turbine 19 and a core exhaust nozzle 20. A nacelle 21 surrounds the gas turbine engine 10 and defines a bypass duct 22 and a bypass exhaust nozzle 18. The bypass airflow B flows through the bypass duct 22. The fan 23 is attached to and driven by the low pressure turbine 19 via a shaft 26 and an epicyclic gearbox 30.

In use, the core airflow A is accelerated and compressed by the low pressure compressor 14 and directed into the high pressure compressor 15 where further compression takes place. The compressed air exhausted from the high pressure compressor 15 is directed into the combustion equipment 16 where it is mixed with fuel and the mixture is combusted. The resultant hot combustion products then expand through, and thereby drive, the high pressure and low pressure turbines 17, 19 before being exhausted through the nozzle 20 to provide some propulsive thrust. The high pressure turbine 17 drives the high pressure compressor 15 by a suitable interconnecting shaft 27. The fan 23 generally provides the majority of the propulsive thrust. The epicyclic gearbox 30 is a reduction gearbox.

An exemplary arrangement for a geared fan gas turbine engine 10 is shown in Figure 2. The low pressure turbine 19 (see Figure 1) drives the shaft 26, which is coupled to a sun wheel, or sun gear, 28 of the epicyclic gear arrangement 30. Radially outwardly of the sun gear 28 and intermeshing therewith is a plurality of planet gears 32 that are coupled together by a planet carrier 34. The planet carrier 34 constrains the planet gears 32 to precess around the sun gear 28 in synchronicity whilst enabling each planet gear 32 to rotate about its own axis. The planet carrier 34 is coupled via linkages 36 to the fan 23 in order to drive its rotation about the engine axis 9. Radially outwardly of the planet gears 32 and intermeshing therewith is an annulus or ring gear 38 that is coupled, via linkages 40, to a stationary supporting structure 24.

Note that the terms "low pressure turbine" and "low pressure compressor" as used herein may be taken to mean the lowest pressure turbine stages and lowest pressure compressor stages (i.e. not including the fan 23) respectively and/or the turbine and compressor stages that are connected together by the interconnecting shaft 26 with the lowest rotational speed in the engine (i.e. not including the gearbox output shaft that drives the fan 23). In some literature, the "low pressure turbine" and "low pressure compressor" referred to herein may alternatively be known as the "intermediate pressure turbine" and "intermediate pressure compressor". Where such alternative nomenclature is used, the fan 23 may be referred to as a first, or lowest pressure, compression stage.

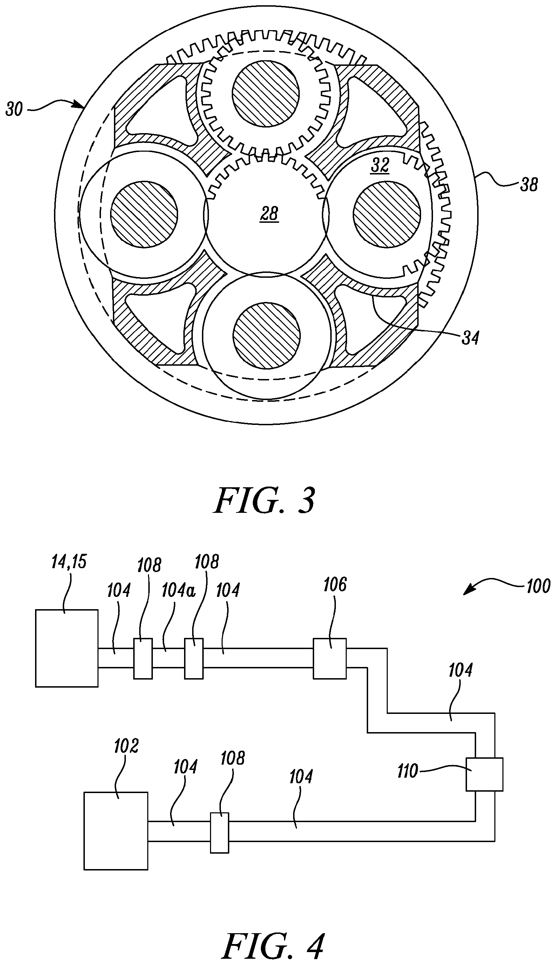

The epicyclic gearbox 30 is shown by way of example in greater detail in Figure 3. Each of the sun gear 28, planet gears 32 and ring gear 38 comprise teeth about their periphery to intermesh with the other gears. However, for clarity only exemplary portions of the teeth are illustrated in Figure 3. There are four planet gears 32 illustrated, although it will be apparent to the skilled reader that more or fewer planet gears 32 may be provided within the scope of the claimed invention. Practical applications of a planetary epicyclic gearbox 30 generally comprise at least three planet gears 32.

The epicyclic gearbox 30 illustrated by way of example in Figures 2 and 3 is of the planetary type, in that the planet carrier 34 is coupled to an output shaft via linkages 36, with the ring gear 38 fixed. However, any other suitable type of epicyclic gearbox 30 may be used. By way of further example, the epicyclic gearbox 30 may be a star arrangement, in which the planet carrier 34 is held fixed, with the ring (or annulus) gear 38 allowed to rotate. In such an arrangement the fan 23 is driven by the ring gear 38. By way of further alternative example, the gearbox 30 may be a differential gearbox in which the ring gear 38 and the planet carrier 34 are both allowed to rotate.

It will be appreciated that the arrangement shown in Figures 2 and 3 is by way of example only, and various alternatives are within the scope of the present disclosure. Purely by way of example, any suitable arrangement may be used for locating the gearbox 30 in the engine 10 and/or for connecting the gearbox 30 to the engine 10. By way of further example, the connections (such as the linkages 36, 40 in the Figure 2 example) between the gearbox 30 and other parts of the engine 10 (such as the input shaft 26, the output shaft and the fixed structure 24) may have any desired degree of stiffness or flexibility. By way of further example, any suitable arrangement of the bearings between rotating and stationary parts of the engine (for example between the input and output shafts from the gearbox and the fixed structures, such as the gearbox casing) may be used, and the disclosure is not limited to the exemplary arrangement of Figure 2. For example, where the gearbox 30 has a star arrangement (described above), the skilled person would readily understand that the arrangement of output and support linkages and bearing locations would typically be different to that shown by way of example in Figure 2.

Accordingly, the present disclosure extends to a gas turbine engine having any arrangement of gearbox styles (for example star or planetary), support structures, input and output shaft arrangement, and bearing locations.

Optionally, the gearbox may drive additional and/or alternative components (e.g. the intermediate pressure compressor and/or a booster compressor).

Other gas turbine engines to which the present disclosure may be applied may have alternative configurations. For example, such engines may have an alternative number of compressors and/or turbines and/or an alternative number of interconnecting shafts. By way of further example, the gas turbine engine shown in Figure 1 has a split flow nozzle 20, 22 meaning that the flow through the bypass duct 22 has its own nozzle that is separate to and radially outside the core engine nozzle 20. However, this is not limiting, and any aspect of the present disclosure may also apply to engines in which the flow through the bypass duct 22 and the flow through the core 11 are mixed, or combined, before (or upstream of) a single nozzle, which may be referred to as a mixed flow nozzle. One or both nozzles (whether mixed or split flow) may have a fixed or variable area. Whilst the described example relates to a turbofan engine, the disclosure may apply, for example, to any type of gas turbine engine, such as an open rotor (in which the fan stage is not surrounded by a nacelle) or turboprop engine, for example. In some arrangements, the gas turbine engine 10 may not comprise a gearbox 30.

The geometry of the gas turbine engine 10, and components thereof, is defined by a conventional axis system, comprising an axial direction (which is aligned with the rotational axis 9), a radial direction (in the bottom-to-top direction in Figure 1), and a circumferential direction (perpendicular to the page in the Figure 1 view). The axial, radial and circumferential directions are mutually perpendicular.

Figure 4 illustrates an example of an air duct system 100 for delivering air from a compressor 14, 15 of a gas turbine engine 10 to a passenger cabin air supply system 102. The system 100 includes a number of sections of ducts 104, and is mounted on a core 11 or nacelle 21 of the engine 10.

As the engine 10 undergoes acceleration the loading means that different parts of the ducting system 100 may be displaced relative to other parts. Similar displacement is caused by the engine 10 thermally expanding and contracting, and by different thermal expansion of contraction of parts of the engine 10 at different rates.

In order to accommodate relative displacement of the different parts of the duct system 100, the duct sections 104 may be joined by flexible joints. The flexible joints can also accommodate tolerances in the manufacture and installation of the ducting system 100.

One type of flexible joint is a gimbal joint 106. A gimbal joint 106 connects two different duct sections 104, and allows each duct section 104 to rotate about of cone of movement around an axis of the joint 106. The gimbal joint 106 also restricts torsional forces.

In some cases, access may be required to particular duct sections 104 for maintenance or replacement. In such cases, sections of duct 104 may be coupled together by non-flexible disconnectable joints such as vee-band clamps 108. Where vee-band clamps 108 are provided at either end of a duct section 104a, the section 104a may be easily removed and replaced.

The system 100 further includes flexible disconnect joints 110 where access is required to the ducts 104 in the system 100, and it is also necessary to accommodate relative displacement forces on the ducts 104 in the same location.

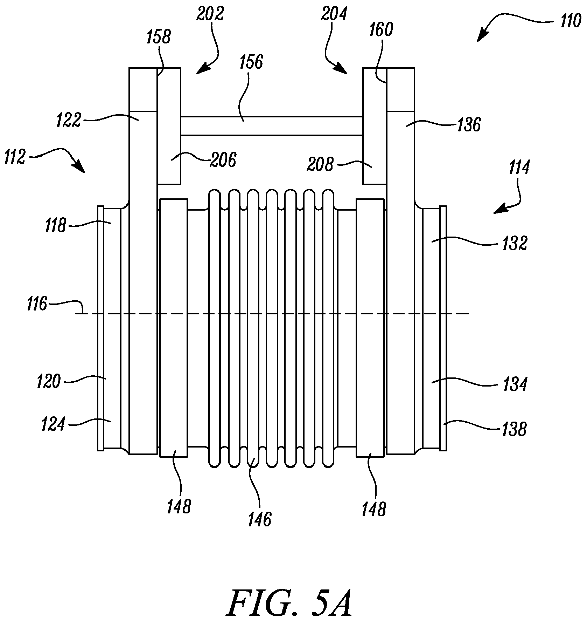

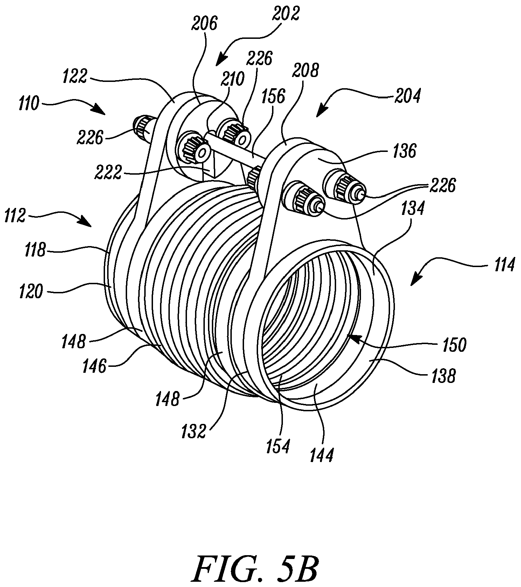

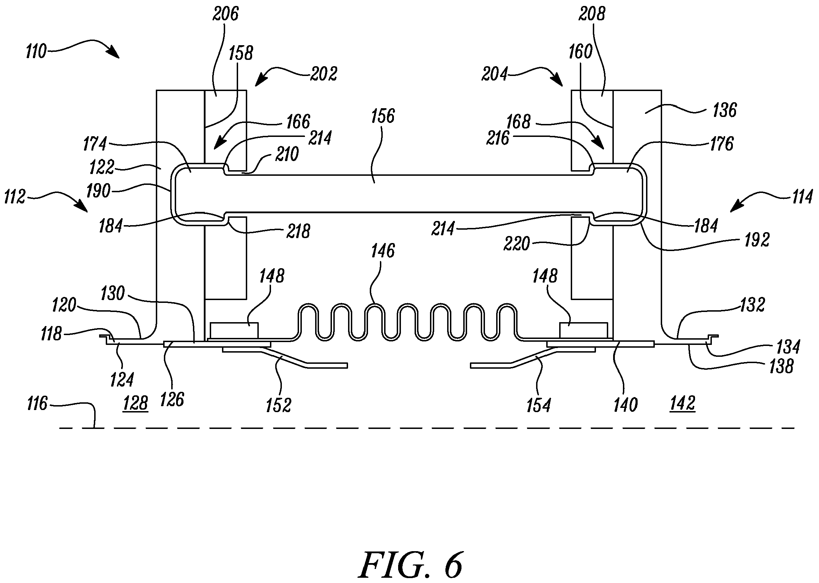

Figures 5A, 5B and 6 illustrate an embodiment of a flexible disconnect joint 110 in more detail. Figures 5A and 5B illustrate the joint 110 in side and perspective view, whilst Figure 6 illustrates a cut-through sectional view of the joint 110.

In the following description, the flexible disconnect joint 110 will be described in the absence of any distortion force, as shown in the Figures. It will be appreciated that displacement forces of the ducts 104 may alter the relative arrangement of the joint 110.

The flexible disconnect joint 110 extends from a first end 112 to a second end 114, along an axial direction 116. At the first end 112 of the flexible disconnect joint 110, a first connector 118 is provided. The connector 118 comprises a first annular joining portion 120 and a first bearing member 122 formed as a projection extending radially outward from the joint portion 120, perpendicular to the axial direction 116. The bearing member 122 only extends for a portion of the circumference of the joining portion 120, and does not extend around the full circumference of the flexible disconnect joint 110.

The joint portion 120 defines a passage 128 through the first connector 118. On a first side of the joint portion 120, a first annular lip 124 is formed for joining the first connector 118 to a duct section 104. The joint between the first connector 118 and the duct 104 may be formed by welding, or any other suitable fixing means, to form a rigid (or fixed) connection.

On a second side of the joint portion 120, an annular recess 126 is formed in the surface of the connector defining the passage 128. An annular cuff 130 is fixed to the connector 118 in the recess 126, for example by welding, and extends along the axial direction 116, out of the second side of the joint portion 120. The depth of the recess 126 is such that the inner surface of the cuff 130 forms a continuous or substantially continuous surface defining the passage 128.

At the second end 114 of the flexible disconnect joint 110, a second connector 132 is provided. The second connector 132 is a mirror image of the first connector 118, about a plane perpendicular to the axial direction 116.

Therefore, the second connector 132 comprises a second annular joining portion 134 and a second bearing member 136 formed as a projection extending radially outward from the joint portion 134, perpendicular to the axial direction 116. The bearing member 136 only extends for a portion of the circumference of the joining portion 134, and does not extend around the full circumference of the flexible disconnect joint 110.

The joint portion 134 defines a passage 142 through the second connector 132. On a first side of the joint portion 134, a second annular lip 138 is formed for joining the second connector 132 to a duct section 104. The joint between the second connector 132 and the duct 104 may be formed by welding, or any other suitable fixing means, to form a rigid (or fixed) connection.

On a second side of the joint portion 134, an annular recess 140 is formed in the surface of the connector defining the passage 142. An annular cuff 144 is fixed to the connector 132 in the recess 140, for example by welding, and extends along the axial direction 116, out of the second side of the joint portion 134. The depth of the recess 140 is such that the inner surface of the cuff 144 forms a continuous or substantially continuous surface defining the passage 142.

In the flexible disconnect joint 110, the first and second connectors 118, 132 are arranged with their second sides facing each other, such that the first annular cuff 130 extends towards the second connector 132, and the second annular cuff 144 extends towards the first connector 118, and the ducting sections 104 both extend away from the flexible disconnect joint 110. The bearing members 122, 136 are circumferentially aligned around the axial direction 116, such that they face towards each other.

A bellows section 146 is provided between the connectors 118, 132. The bellows section 146 fits over the part of the cuffs 130, 144 extending out of the joint portions 120, 134 of the connectors 118, 132, and is secured by a Jubilee@ clip 148 or other suitable fastener to clamp the bellows section 146 to each cuff 130, 144. The connectors 118, 132, cuffs 130, 144 and bellows section 146 combine to form a passage 150 through the flexible disconnect joint 110, between the duct sections 104 fixed to the two connectors 118, 132. The joint 110 maintains pressure in the ducting system 100, even when under displacement forces.

On the radially interior surface of each cuff, a flow liner 152, 54 is provided, extending into the bellows section 146. The flow liner minimises pressure losses and turbulent effects through the joint 110 and hence the wider ducting system 100, and additionally minimises flow induced vibration in the bellows section 146. The flow liners 152, 154 may be any suitable material, such as Inconel® 625, Inconel® 718, Steel, or Titanium..

The bellows section 146 accommodates relative displacement of the duct sections 104, by allowing for relative displacement of the connectors 118, 132, whilst maintaining the connection between the duct sections 104.

In order to manage high loads without breaking the bellows section 146, a rigid connector rod 156 is provided between the bearing members 122, 136, to limit the range of movement of the bellows section 146.

Each bearing member 122, 136 defines a bearing surface 158, 160, that face towards each other. The bearing surfaces 158, 160 extend parallel to each other and perpendicular to the axial direction 116.

The rod 156 extends from a first end 162 to a second end 164, parallel to the axial direction 116. The first end 162 of the rod 156 engages the first bearing surface 158 at a first restricted pivot joint 166. The second end 164 of the rod 156 engages the second bearing surface 160 at a second restricted pivot joint 168.

As will be discussed in more detail below, each restricted pivot joint 166, 168 only allows the rod 156 to pivot relative to the respective bearing surface 158, 160 along a single linear pivot direction 170, 172. The pivot directions 170, 172 extend perpendicular to the axial direction 116, and perpendicular to each other, to allow relative displacement of the two ends 112, 114 of the flexible connector joint 110 around a range of 360 degrees.

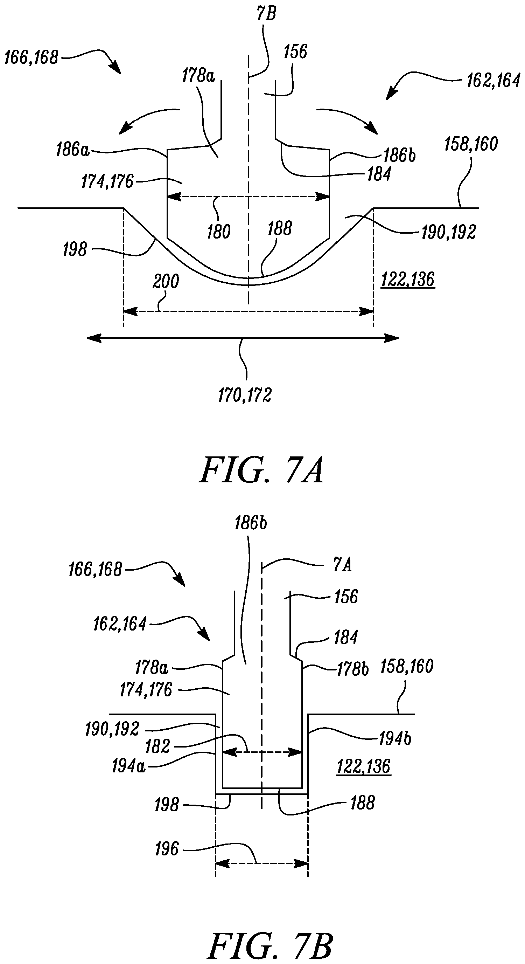

Figures 7A and 7B illustrate an example of one of a restricted pivot joint 166, 168 in more detail. Figure 7A shows a cross-section through a pivot joint 166, 168, taken parallel to the pivot direction 170, 172, whilst Figure 7B illustrates the pivot joint 166, 168 in cross section perpendicular to the pivot direction 170, 172.

In the example shown, the rod 156 is generally cylindrical along its length. However, at each end 162, 164 an enlarged end portion 174, 176 is formed. The end portion 174, 176, is formed by a pair of planar parallel sides 178a,b. The sides 178a,b extend parallel to the length of the rod 156, and parallel to the pivot direction 170, 172. Front and rear faces 186a,b are formed between the sides 178a,b. The sides 178a,b have a width 180 larger than the diameter of the rod 156, to form an enlarged section of the rod 156. However, perpendicular to the pivot direction 170, 172 the thickness 182 between the sides 178a,b is approximately equal to the diameter of the rod 156, so the end portion 174, 176 is only enlarged in one direction.

Where the end portion 174, 176 meets the rod, a shoulder 184 is formed. Opposite the shoulder, on the end portion 174, 176, an end face 188 is provided, forming the end surface of the rod 156. In cross section parallel to the pivot direction 172, 174, the end face is curved, about a radius of curvature in the plane of the sides 178a,b. There is no curvature of the end face 188 perpendicular to the pivot direction 170, 172.

A depression 190, 192, corresponding to the enlarged end portion is formed in the bearing surfaces 158, 160. The depression 190, 192, has planar sidewalls 194a,b extending parallel to the pivot direction 170, 172. The sides 194a,b are separated by a spacing 196. The depression 190. 192 further includes a base 198 extending between the sidewalls 194a,b, and to the bearing surface 158, 160.

The base 198 is curved, with a radius of curvature in the plane of the sidewalls 194a,b. the curved base extends from the bearing surface 158, 160 and thus forms the full width 200 of the depression 190, 192. There is no curvature in the base 198 perpendicular to the pivot direction 170, 172.

The depression 190, 192 receives the end portion 174, 176 of the rod. Due to the shape of the end portion 174, 176 and the depression 190, 192, the depression 190, 192 may only receive the end portion 174, 176 in one direction.

The spacing 196 between the sidewalls 194a,b of the depression 190, 192 is arranged to receive the thickness 182 of the end portion 174, 176 of the rod 156, but prevent any pivoting of the rod 156 in a direction perpendicular to the pivot direction 170, 172. As such, the spacing 196 between the sidewalls 194a,b of the depression 190, 192 is substantially the same as the thickness 182 of the end portion 174, 176 of the rod 156.

The radius of curvature of the base 198 is substantially the same as the radius of curvature of the end face 188 of the end portion 174, 176. Furthermore, the width 200 of the depression 190, 192 is larger than the width 180 of the end portion 174, 176. Thus, the rod 156 is able to pivot relative to the bearing surface 158, 160, but only along the pivot direction 170, 172 (i.e. the rod 156 pivots about a pivot point formed between the end face 188 of the rod 15, and the base 198 of the depression 190, 192, about an axis perpendicular to the pivot direction 170, 172 and the length of the rod 156).

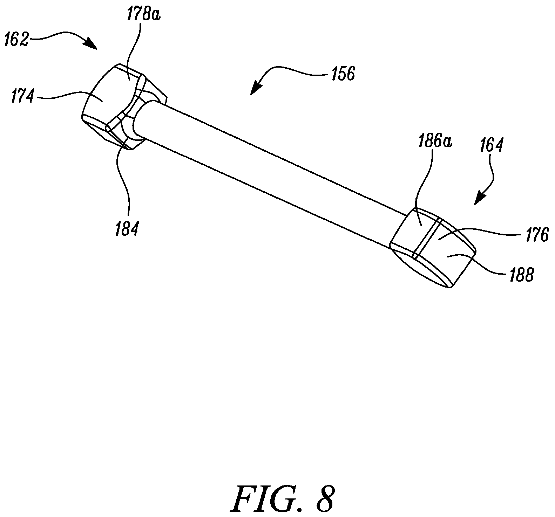

Figure 8 illustrates the rod 156, showing both enlarged end portions 174, 176. As shown in Figure 8, the width 180 of the first end portion 174 is perpendicular to the width 180 of the second end portion 176. This ensures that the pivot direction 170 at the first bearing surface 158 is perpendicular to the pivot direction 172 at the second bearing surface 160.

The rod 156 is rigid in structure. Therefore, the length of the rod 156 prevents compression of the flexible disconnect joint 110 along the axial direction 116. In order to prevent expansion, and to retain the rod 156, clamps 202, 204 are provided to fix the rod 156 to each bearing surface 158, 160.

Each clamp 202, 204 is formed of a disc 206, 208 secured to the respective bearing surface 158, 160. Each disc 296, 208 includes an aperture 210, 212 through which the rod 156 passes. On the face of the disc 206, 208 that engages the bearing surface 158, 160, a recess 214, 216 is formed around the aperture 210, 212, forming a step 218, 220 in the disc 206, 208. The recess 214, 216 receives the enlarged end portion 174, 176 of the rod 156, such that the shoulder 184 engages the step 218, 220 to prevent axial expansion of the flexible disconnect joint 110. The shoulder 180 may thus be seen as a retaining portion of the rod 156.

The aperture 210, 212 and recess 214, 216 are sized to retain the rod 156, but also to allow pivoting of the rod 156 about the pivot joints 166, 168 to be unobstructed along the pivot direction 170, 172.

Each disc 206, 208 also includes a slot 222, 224 extending through the thickness of the disc 206, 208, in the axial direction 116. The slot extends radially form the aperture 210, 212 to the edge of the disc 206, 208 and is the width of the rod 156. Thus the slot 222, 224 allows the disc 206, 208 to be fitted over the rod 156, to assemble the joint. The rod 156 can then be secured to the bearing member 122, 136 by bolts 226 or other suitable fasteners.

When assembling the flexible disconnect joint 110, ducts 104 (also referred to as conduits) are fixed to the connectors 118, 132 as discussed above. The bellows section 146 is then secured to the connectors 118, 132 using Jubilee@ clips 148 or the like. The rod 156 is fitted between the bearing members 122, 136. The rod 156 is then secured using the discs 206, 208. The discs 206, 208 are positioned using the slots 222, 224 formed in the discs 206, 208, and the discs 206, 208 are then bolted to the bearing members 122, 136.

As discussed above, the bellows section 146 provides for flexibility of the flexible disconnect joint 110,whilst the rod 156 restricts the movement of the bellows 146, to accommodate high loads. Where a user wishes to disconnect one or both of the duct sections 104 coupled to the flexible disconnect joint 110, one or both of the discs 206, 208 is unbolted from the respective bearing member 122, 136 and the rod 156 disconnected. The bellows section 146 is then disconnected by disconnecting the Jubilee® clips 148. This then allows one or both of the duct sections 104 to be maintained or replaced. If the duct 104 is replaced, a new connector 118, 132 may be provided, or the connector may be recovered from the old duct 104.

In the flexible disconnect joint 110 discussed above, the rod 156 is continuous along its length form the first end 162 to the second end 164. In an alternative example, the rod 228 is formed by two portions 230, 232 joined along the length of the rod 156. Unless stated otherwise, the alternative example is the same as the joint 100 discussed above.

In the alternative example, the first rod portion 230 forms the first end 162 of the rod 156, including the first end portion 174 and part of the length of the rod 200. The second rod portion 232 includes the second end portion 176 and part of the length of the rod 200. The first and second portions are coupled together at a joint 234.

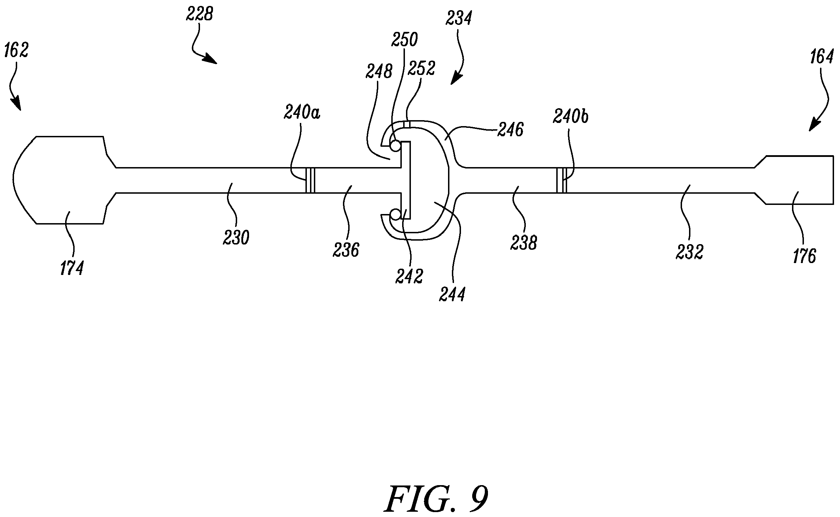

Figure 9 shows the rod 228 for this alternative embodiment, showing the joint 234 in more detail.

The joint 234 includes a first joint member 236 fitted on the end of the first rod portion 230 by interengaging screw threads 240a, and a second joint member 238 fitted on the end of the second rod section 232, also by interengaging screw threads 240b

The first joint member 236 includes a head portion 242 extending radially out from the length of the rod 228. The second joint member 238 includes an enclosure (or socket) 244 arranged to receive the head portion 242. The enclosure is formed by an annularly extending wall 246 around the axial direction defined by the length of the rod 200.

The wall 246 forming the enclosure 244 defines an axially facing opening 248. The opening 248 is sized so that the head 242 can pass through the opening, into the enclosure 244, when assembling the rod 200. In order to secure the joint 234, a wire 250 is wound around the first joint member 236, inside the enclosure 244. The wire 250 is fed through an aperture 252 in the enclosure wall 246, and enlarges the size of the head portion 242, so it cannot pass back through the opening 248. Furthermore, a tight fit is formed between the head portion 242 and socket 244, to prevent any pivoting of the rod 228 around the joint.

This type of joint 234 is sometimes referred to as a ferrule joint.

The joint 234 in the rod 200 may be disconnected by removing the wire 250. This can be either by cutting the wire 250, are unwinding it. This allows the rod portions 230, 232 to be separated from each other.

Disconnecting the rod portions 230, 232 provides an alternative way to disconnect the flexible disconnect joint 200. Therefore, in a flexible disconnect joint 110 including a rod 228, with a disconnectable joint 234 along its length, the pivot joints 166, 168 may be permanently connected to the bearing surfaces 158, 160. For example, the discs 206, 208 forming the clamps 202, 204 may be welded or otherwise permanently connected to the bearing members 122, 136.

As shown in Figure 9, the socket 244 extends over an axial length greater than an axial length of the head portion 242. Therefore, the first joint portion 230 can slide axially along the length of the enclosure 244, relative to the second joint portion 232. This allows the flexible disconnect joint 100 incorporating the rod 230 to accommodate some axial compression or expansion.

The flexible disconnect joint 110 may be formed of any suitable material, such as, for example, Inconel® 625, Inconel® 718, Steel, or Titanium. In some examples, the connectors 118, 132, bearing members 122, 134, bellows section 146, rod 156, 228, and clamp discs 206, 208 may be formed of the same material. In other examples, some or all of these components may be formed by different materials. The material used may be, at least in part, determined by the use of the ducting system 100. For example, where hot air or fluid is passed through the ducts 104, or the ducts 104 are provided in a high temperature environment, the joint 110 should be able to withstand this.

The bellows section 146 provided between the connectors 118, 132 is given by way of example only. Any suitable flexible conduit may be used in place of bellows. Furthermore, the flexible conduit 146 may be fixed to the connectors 118, 132 by any suitable releasable connection mechanism, other than Jubilee@ clips.

In some examples, the connectors 118, 132 may be releasably fixed to the ducts 104, and fixedly fixed to the flexible conduit 146.

The pivot joints 166, 168 at the bearing surfaces 158, 160 are given by way of example only. Any suitable construction of pivot may be used to provide the necessary movement between the bearing surfaces 158, 160.

In some examples, the width 180 of the end portion 174, 176 may be the same as or less than the width 200 of the depression 190, 192, and still accommodate pivoting along a joint direction 170, 172.

Furthermore, in the example discussed above, the pivot joints 166, 168 have limited freedom of movement, such that each pivot joint 166, 168 can only pivot along a single direction 170, 172. This is by way of example only, and the pivot joints 166,168 may have any suitable freedom of movement. In some cases, the freedom of movement of the flexible disconnect joint 110 may be further restricted by altering the relative angle between the two pivot directions 170, 172, where the pivot joints 166, 168 are restricted as discussed above.

In the examples discussed above, the bearing surfaces 158, 160 are parallel to each other and perpendicular to the axial direction 116 of the joint 110. Neither of these requirements are essential.

The clamping discs 206, 208 may be fixed to the bearing surface 158, 160 in any suitable permanent or releasable manners, as required.

Where the clamps 206, 208 are permanently secured to the bearing surfaces 158, 160, a disconnectable joint 234 may be formed in the rod 228 in any suitable manner. The ferrule connection discussed above is given by way of example only. Furthermore, in such cases, the connection 234 in the rod 228 does not necessarily have to accommodate expansion and compression of the rod 228, and may instead form a simple rigid rod 228.

In the example discussed in relation to Figure 9, the joint members 236, 238 are coupled to the rod portions 230, 232 by screw threads 240a,b. However, it will be appreciated that any suitable fixing may be used. Furthermore, in some examples, the joint members 236, 238 may be integral with the rod portions 230, 232.

The system discussed in Figure 1 is given as an illustrative example only. The system may have any suitable arrangement, and may include flexible disconnect joints 110 only, or flexible disconnect joints 110 along with flexible joints 106 and/or non-flexible disconnect joints 108, as the requirements of the system 100 require. The flexible disconnect joint 110 can be used in any situation in the system 100. One example of using the flexible disconnect joint 110 could be where both a disconnect joint 108 and flexible joint 106 is required. By using a single flexible disconnect joint 110, only a single component is needed and weight saved.

In the examples discussed above, the ducting system 100 including a flexible disconnect joint 110 is used in a gas turbine engine. However, it will be appreciated that the system and joint 110 can be used in any environment.

It will be understood that the invention is not limited to the embodiments above-described and various modifications and improvements can be made without departing from the concepts described herein. Except where mutually exclusive, any of the features may be employed separately or in combination with any other features and the disclosure extends to and includes all combinations and subcombinations of one or more features described herein.

## Claims

1. A joint (110)for coupling ducts (104), the joint (110) including:
a flexible conduit section (146) extending along an axial direction (116) from a first end (112) to a second end (114);
a first connector (118) at a first end (112) of the flexible conduit (146), arranged to releasably couple the flexible conduit section (146) to a first duct (104);
a first bearing member (122) extending from the first connector (118), and forming a first bearing surface (158) defining a first plane, wherein the axial direction (116) passes through the first plane;
a second connector (132) at the second end (114) of the flexible conduit (146), arranged to releasably couple the flexible conduit section (146) to a second duct (104);
a second bearing member (136) extending from the second connector (132), the second bearing member (136) forming a second bearing surface (160) facing the first bearing surface (158) and defining a second plane, wherein the axial direction (116) passes through the second plane;
a rod (156, 228) extending between the bearing surfaces (158, 160), wherein the rod (156, 228) pivotally engages the first bearing surface (158) at a first pivot joint (166), and the second bearing surface (160) at a second pivot joint (168), and wherein the rod (156, 228) is arranged to releasably couple the first bearing member (122) to the second bearing member (136).

2. The joint of claim 1, wherein:
the first pivot joint (166) is configured to enable the rod (156, 228) to pivot relative to the first bearing surface (158) along a first pivot direction (170) in the first plane; and
the second pivot joint (168) is configured to enable the rod (156, 228) to pivot relative to the second bearing surface (160) along a second pivot direction (172) in the second plane.

3. The joint (110) of claim 1, wherein each pivot joint (166, 168) includes:
an end portion (174, 176) of the rod (156, 228) comprising a face (188) forming an end (162, 164) of the rod (156, 228), wherein the face (188) is curved in cross section taken parallel to the pivot direction (170, 172) and the axial direction (116); and
a depression (190, 192) into the bearing surface (158, 160) arranged to receive at least part of the end portion (174, 176) of the rod (156, 228), and having a base (198), wherein the base (198) is curved in cross-section taken parallel to the pivot direction (170, 172) and the axial direction (116) and extends over a width (200) along the pivot direction (170, 172), wherein the width (200) of the depression (190, 192) is greater than the width (180) of the end portion (174, 176) of the rod (156, 228, and wherein a radius of curvature of the base (198) of the depression (190, 192) matches a radius of curvature of the face (188) of the end (162, 164) of the rod (156, 228).

4. The joint (110) of any preceding claim, wherein the rod (156, 228) includes a first retaining (184) portion at the first bearing surface (158), and a second retaining portion (184) at the second bearing surface (160); and wherein the joint (110) further includes a first clamping member (202) arranged to engage the first bearing surface (158) and first retaining portion (184) to secure the rod (156, 228) to the first bearing surface (158), and a second clamping member (204) arranged to engage the second bearing surface (160) and second retaining portion (184) to secure the rod (156, 228) to the second bearing surface (160).

5. The joint (110) of claim 4, wherein each clamping member (202, 204) is arranged around the rod (156, 228), and includes an opening (210, 212) through which the rod (156, 228) passes, and wherein the opening (210, 212) is larger than the rod (156, 228), such that the clamping member (202, 204) allows the rod (156, 228) to pivot relative to the bearing surface (158, 160).

6. The joint (110) of claim 4 or claim 5, wherein the clamping members (202, 204) are fixedly secured to the bearing surfaces (158, 160), and wherein the rod (228) includes a first rod portion (230), a second rod portion (232), and a releasable connection (234) between the first rod portion (230) and the second rod portion (232).

7. The joint (110) of claim 6, wherein the releasable connection (234) comprises a slip joint arranged to accommodate extension of compression of the rod (228) in the axial direction (116).

8. The joint (110) of any preceding claim, wherein at least one of the first plane and the second plane extend perpendicular to the axial direction (116).

9. The joint (110) of any preceding claim, wherein the first plane is parallel to the second plane.

10. The joint (110) of any preceding claim, wherein the rod (156, 228) extends parallel to the axial direction (116).

11. The joint (110) of any preceding claim, wherein the first and second bearing members (122, 136) extend radially out from the flexible conduit (146).

12. The joint (110) of any preceding claim, wherein the flexible conduit (146) comprises a bellows section.

13. An air ducting system (100) comprising:
a first duct (104);
a second duct (104); and
a joint (110) as claimed in any preceding claim, coupling the first duct (104) to the second duct (104).

14. A gas turbine aircraft engine (10) comprising an air ducting system (100) as claimed in claim 13, to provide one or more of the following:
cabin bleed air;
air transfer to or from a further gas turbine aircraft engine;
air for anti-icing systems; and
starter air.
